(19) Europäisches Patentamt
European Patent Office
Office européen des brevets

(11) EP 1 683 301 B1

(12) **EUROPEAN PATENT SPECIFICATION**

(45) Date of publication and mention of the grant of the patent:
**30.09.2009 Bulletin 2009/40**

(21) Application number: **04779832.7**

(22) Date of filing: **02.08.2004**

(51) Int Cl.:
***H04L 12/24*** *(2006.01)* ***H04L 12/26*** *(2006.01)*

(86) International application number:
**PCT/US2004/024894**

(87) International publication number:
**WO 2005/013556 (10.02.2005 Gazette 2005/06)**

(54) **Systems and methods for intelligent probe testing**

Systeme und Verfahren zur intellegenten Sonderprüfung

Systèmes et procédés de test par sonde intelligente

(84) Designated Contracting States:
**AT BE BG CH CY CZ DE DK EE ES FI FR GB GR HU IE IT LI LU MC NL PL PT RO SE SI SK TR**

(30) Priority: **01.08.2003 US 491566 P**
**14.05.2004 US 845517**
**07.06.2004 US 577165 P**

(43) Date of publication of application:
**26.07.2006 Bulletin 2006/30**

(73) Proprietor: **OPNET Technologies, Inc.**
**Bethesda, MD 20814 (US)**

(72) Inventors:
- **KANNAN, Navneeth, N.**
**Westford, MA 01886 (US)**
- **GRAY, Eric, W.**
**Lee, NH 03824 (US)**

(74) Representative: **Van Straaten, Joop**
**Octrooibureau Van Straaten**
**Mgr. Bosstraat 22**
**5401 EB Uden (NL)**

(56) References cited:
**EP-A- 0 957 432**
**EP-A- 1 447 940**
**WO-A-02/51181**
**US-A1- 2002 167 936**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 683 301 B1

## Description

## BACKGROUND OF THE INVENTION

### Field of the Invention

The present invention generally relates to communication systems and, in particular, to systems and methods for testing network systems and processors.

### Background and Material Information

Probes can be used to test a communication network, including any part of the network, such as network nodes, devices, components, interfaces, links, protocols, and the like. For example, in a simple network consisting of two routers connected by a communication link (such as an Internet Protocol (IP) network), a probe may be configured at each router to measure various parameters including packet loss, jitter, latency, etc. Each of the probes may be a hardware-type probe, a software-type probe, or a combination of the two.

When a network service provider offers network services to a customer, they usually agree one or more performance or service levels to be provided by the network. For example, a customer may have two types of traffic, such as voice traffic and email traffic, each of which may require a different level of service. In this example, the customer may enter into a Service Level Agreement (SLA) that provides a higher level of service (e.g., low jitter, low latency, and low packet loss) to voice traffic, and a lower level of service (e.g., best efforts) to email traffic. The network service provider and the customer will then want to know whether the performance parameters of the SLA are being met. If the service provider has other SLAs for other customers, the performance associated with those other customers will also be of interest.

To that end, probes have typically been deployed to monitor each customer and/or service. Although it may be useful to accurately monitor performance for every customer, in a complex network environment with a variety of customers and/or services, deploying a probe at/to each customer or service interface is not practical (e.g., it is cost prohibitive).

An example of a known method is provided in United States Patent Application 2002/0167936 by Goodman. United States Patent Application 2002/0167916 discloses a method and system for testing a first interface belonging to a first node in a network over a second interface belonging to a second node in a network. Each of the test probes at each of the interfaces is configured differently.

Therefore, there is a need to provide a system and method that can monitor the performance of customers and/or services without requiring the deployment of a dedicated hardware and/or software probe to each customer location and/or interface.

## SUMMARY OF THE INVENTION

The present invention is directed to the method according claim 1 and corresponded system according claim 24.

Systems and methods consistent with one embodiment of the present invention can testa first node having at least a first interface by configuring, at the first node, a second interface, such that the configured second interface has one or more quality of service parameters being the same or similar to the quality of service parameters of the first interface. Moreover, systems and methods consistent with one embodiment of the present invention can send one or more packets through the configured second interface, the one or more packets having the same or similar type as packets typically received at the first interface.

Furthermore, systems and methods consistent with one embodiment of the present invention can determine, based on the one or more packets, one or more performance parameters corresponding to the first interface under test.

Additional features and advantages of various embodiments may be realized and attained by the systems and methods particularly described in the written description, the appended drawings, and the claims.

## BRIEF DESCRIPTION OF THE DRAWINGS

The accompanying drawings, which are incorporated in and constitute a part of this specification, illustrate various embodiments and aspects of the present invention and, together with the description, explain the principles of the invention. In the drawings:

FIG. 1 illustrates an exemplary network environment;

FIG. 2 depicts, in greater detail, a portion of the FIG. 2 network environment;

FIG. 3 is a flowchart showing exemplary steps for determining performance using an intelligent test probe;

FIG. 4 illustrates an exemplary system environment;

FIG. 5 is another flowchart showing exemplary steps for determining performance using an intelligent test probe;

FIG. 6 illustrates another exemplary network environment;

FIG. 7 illustrates the tunnels of the FIG. 6 network environment;

FIG. 8 depicts loop back tests performed to remove the performance contributions of the test probe host (referred to as the Intelligent Network Element (INE);

FIG. 9 is another flowchart showing exemplary steps for determining performance using an intelligent test probe; and

FIG. 10 depicts another exemplary network environment that includes a switch interfacing a local network.

## DETAILED DESCRIPTION

Reference will now be made in detail to embodiments of the invention, examples of which are illustrated in the accompanying drawings and described in the specification. Wherever possible, the same reference numbers will be used throughout the drawings to refer to the same or like parts.

FIG. 1 depicts an exemplary network environment 1000 consistent with one embodiment of the present invention. Referring to FIG. 1, the network environment 1000 includes one or more nodes A-C 1200, 1300, 1302 connected by a communication channel (e.g., a network) 1120 to one or more Intelligent Network Elements (INE) 1170-1171 and a Network Management System (NMS) 1175, all of which will be described in greater detail below.

Each of nodes A-C 1200, 1300, 1302 represents a point on the network such as a processor, a router, a switch, a gateway, or any other communication or data processing device.

Communication channel 1120 may function as a communication network (or links) and may include, alone or in any suitable combination a telephony-based network, a local area network (LAN), a wide area network (WAN), a dedicated intranet, the Internet, a wireless network, or a bus. Further, any suitable combination of wired and/or wireless components, and systems may be incorporated into the communication channels. The term "network" means a system of interconnected nodes including corresponding links and may include one or more of the components depicted in network environment 1000. As used herein, a connection means a path, such as a link or a tunnel.

The Intelligent Network Elements (INE) 1171-1170 function to test an interface (also referred to as the "interface under test") at a node (e.g., node 1200) by configuring another interface at the node, such that the "configured interface" has the same (or similar) quality of service (QoS) parameters to the QoS parameters of the interface under test.

Moreover, one INE 1170 may generate packets and send these packets through the configured interface at node 1200. The packets sent through the configured interface may be generated so that they are similar to the type of packets received at the interface under test. Another INE 1171 may function to receive any generated packets. INE 1171 may also use the received packets to determine one or more performance parameters for node 1200, such as latency, jitter, or packet loss. These parameters serve to test the interface under test at node 1200. As a result, the INE intelligently tests an interface at node 1200 by configuring another interface at the same node and sending packets through the other interface. If multiple interfaces require testing at node 1200, the INE can reconfigure the other interface to have the same (or similar) QoS parameters as those other interfaces under test, and can generate packets that are similar to the packet type received at each interface under test. If multiple nodes are present in network environment 1000, INE 1170 can connect (either virtually or physically) to multiple nodes and test their interfaces. As such, systems and methods consistent with one embodiment of the present invention, reduces (if not eliminates) the need to have a test probe at each interface and at each node in a network.

Moreover, in some embodiments, each of INE 1170 and 1171 may be embodied to have the features disclosed in U.S. Patent Application No. 10/845,517, filed May 14, 2004, entitled "SYSTEMS AND METHODS FOR INFERRING SERVICES ON A NETWORK," [Attorney Docket No. 09278-0001] which is incorporated herein by reference in its entirety. Such features may include participating in a network by, for example, receiving information, such as statistics, event information (e.g., network failures), and topology information (e.g., interfaces, links, and routes to other nodes); and providing information to NMS 1175 including information regarding each of nodes A-C 1200, 1300, 1302 or any other node (e.g., a router) in network environment 1000.

Network Management System (NMS) 1175 may be embodied by one or more data processors. NMS 1175 may function to infer one or more services on network 1000 and to manage network 1000. One of ordinary skill in the art would recognize that network management includes the execution of one or more functions for controlling, planning, allocating, deploying, coordinating, and/or monitoring the resources of a network. Moreover, when a plurality of INEs are present in a network, NMS 1175 may aggregate information provided by the INEs and use that aggregate information to infer one or more services on the network. A service (e.g. an inferred service) may correspond to a virtual private network between nodes, such as node A 1200 and node B 1300. NMS 1175 may be able to infer that one or more virtual private network services exist between nodes 1200 and 1300 by, for example, detecting route targets exported by node A 1200 and/or node B 1300. See for example RFC-2547, E. Rosen et al., The Internet Society (1999), "BGP/MPLS VPNs," that describes route targets and BGP/MPLS (Border Gateway Protocol/Multiprotocol Label Switching) VPNs (draft-ietf-l3vpn-rfc2547bis-01.txt, E. Rosen et al., The Internet Society, September 2003, "BGP/MPLS IP VPNs). In addition to layer-3 type VPNs, such as BGP/MPLS VPNs, other types of VPNs may by inferred including, for example, layer- 2 VPNs.

FIG. 2 depicts a portion of network environment 1000 in greater detail. In particular, node A 1200 and node B 1301 are each depicted as a router, and communication channel 1120 is depicted as an Internet Protocol (IP) network, such as the Internet.

Node A 1200 (labeled PE Router A) may be embodied as a router, such as a Provider Edge (PE) router configured with BGP/MPLS (Border Gateway Protocol/Multiprotocol Label Switching) VPNs. One of ordinary skill in art will recognize that commercially available software may be configured on node A to implement tunnels and corresponding BGP/MPLS VPNs. Moreover, PE Router 1200 may include interface A 201 to a Customer Edge device ($CE_A$) 2060, interface B 202 to customer edge device ($CE_B$) 2061, interface C 203 to INE 1170, and interface D 204 to network 1120. The interfaces may be embodied as any type of physical interface including, for example, an Ethernet interface or a wireless interface. Moreover, interface C 203 and INE 1170 may be connected by a link 1121 which may be a direct connection or a network, such as network 1120. In addition, Customer Edge devices 2060-2066 may be embodied as any type of customer device, such as a Customer Edge (CE) router (see, e.g., RFC - 2547) or any other edge device serving as an interface between a customer and a network. Node B 1301 (labeled PE Router B) may be configured in a manner similar to PE Router A 1200.

FIG. 3 is a flowchart with exemplary steps for determining the performance of a node (or the interfaces therein). Referring to FIGs. 2 and 3, INE 1170 may configure an interface, such as interface C 203, to have a similar QoS profile as customer interface A 201, which is the "interface under test" (step 310). INE 1170 may then send packets through the configured interface C 203. In some embodiments, the generated packets sent through interface C 203 may be of the same type (e.g., header, protocol(s), and/or size) (step 320) as packets typically received at interface A 201, such that the generated packets are injected into a tunnel (not shown) between PE Routers A and B 1200, 1301. INE 1171 may then receive the packets from INE 1170, interface C 203, network 1120, and PE Router 1301. INE 1171 may then determine one or more performance parameters based one the received packets (step 330). For the interface under test, INE 1171 may determine, based on the received packets, performance parameters, such as latency, jitter, and packet loss. If other interfaces require testing, INE 1170 may then repeat steps 310-330 for each of those interfaces (step 340). With the above general description, the following describes steps 310-340 in greater detail.

In one embodiment, before beginning steps 310-340, a user of a network management system; such as NMS 1175, may select one or more virtual private networks (VPNs), such as BGP/MPLS VPNs, to monitor and test performance. In some instances, a user may be prompted to select a specific customer, a customer's VPNs, a link (or connection), and/or specific services for that customer. For example, a user may select customer A's Voice over IP (VoIP) traffic only between New York and Los Angeles. Moreover, the user may be prompted to select how frequently the specific customer VPNs should be tested, the specific parameters to test, and/or any thresholds for generating alarms. The user's profiles for testing can be saved in the INEs or, alternatively, NMS 1175.

To configure an interface, such as interface C 203, to have a similar QoS profile as the interface under test, which in this case is customer interface A 201 (step 310), INE 1170 may issue a query to PE Router A 1200. In this example, PE router A serves as the head-end (or origin) of a tunnel from PE Router A 1200 to PE Router B 1301. By querying PE Router A 1200, INE 1170 may obtain the QoS profile associated with interface A 201 including, for example, the associated class(es) of service, queue priority, and/or drop precedence. One of ordinary skill in the art would recognize that such profile information can be grouped in many commercially available routers as the "QoS Profile," and different profiles associated with different interfaces may be identified uniquely with a name, a number, or other like identifier. In such a case; INE 1170 may simply retrieve the interface A 201 QoS Profile identifier and configure interface C 203 with the same QoS profile.

In some embodiments, INE 1170 may query PE Router A 1200 by reading several MIB (Management Information Base) tables using the SNMP (Simple Network Management Protocol) or using a Command Line Interface (CLI). In some other embodiments, INE 1170 may determine the QoS profile of interface A 201 by discovering such information, as described in co-pending U.S. Patent Application 2005 091482 entitled "SYSTEMS AND METHODS FOR INFERRING SERVICES ON A NETWORK" [Attorney Docket No. 09278-0001]. In such discovery instances, NMS 1175 may store QoS information and any updates (changes and refreshes), allowing INE 1170 to simply read the QoS profile for interface A 201 from QoS information stored in NMS 1175. The QoS profile information may then be configured at interface C 203 (or router 1200) by setting the interface using SNMP, CLI, or the like.

To send packets (step 320), INE 1170 may send packets through link 1121 and interface C 203 with the same (or similar) characteristics as packets received at interface A 201. For example, if interface A 201 has a predetermined QoS Profile identifier named "Platinum 1" associated with VoIP traffic at PE Router A 1200, INE 1170 may generate packets that are of the same (or similar) type (in this example VoIP type packets) including header field(s), size, and/or protocol(s.) INE 1170 may then send the generated packets to interface C 203. At interface C, PE Router A applies the Platinum 1 QoS profile and any associated rules (also known as tunnel injection criteria) that dictate how, when, and what traffic should be allowed access to a BGP/MPLS tunnel originating at PE Router A 1201 and terminating at PE Router B 1301.

One of ordinary skill in the art would recognized that packets received at interface A 201 may be packets from customer 2061 with various destinations including, e.g., destinations 2064 and 2066.

In one embodiment, INE 1170 sets, based on the QoS profile and any corresponding injection criteria for the tunnel, one or more of the following header fields in the packets generated by the INE 1170: (1) a DSCP (Differentiated Services Code Point) value that is indicative of the incoming priority of the packet; (2) an IP protocol number (e.g., based on the IP protocol, PE Router A 1200 may treat packets differently); (3) an application protocol number (if PE Router A 1200 is capable of treating different applications differently); and (4) source and destination IP addresses and/or ports. Returning to the above example, the injection criteria would include rules that would allow or deny access to a BGP/MPLS tunnel from PE Router A 1200 to PE Router B 1300 based on, for example, one or more of the values associated with (1) - (4).

To determine performance parameters (step 330), INE 1171 receives the packets from interfaces 203 and 204, network 1120 (and the BGP/MPLS tunnel therein), PE Router 1301, and link 1122. Based on the received packet(s), INE 1171 will determine one or more performance parameters, such as latency, jitter, and/or packet loss. For example, if the packet generated by INE 1170 includes a time stamp, INE 1171 can measure latency, jitter, and packet loss at INE 1171. Moreover, INE 1171 may perform additional processing to remove the effects of link 1121 and link 1122, as will be described in greater detail below with respect to FIG. 8. The determined one or more parameters represent the performance of the interface under test, which in this case is interface A 201.

If other interfaces (e.g., interface B 202) are scheduled to be tested, INE 1170 then repeats steps 310-330 for those interfaces (step 340). Otherwise, the process ends.

Each of nodes A-C 1200, 1301, 1302, INEs 1170-1171, and NMS 1175 may be implemented as a data processor, such as data processor 4000 depicted in block diagram form at FIG. 4. Data processor 4000 may include a central processing unit 4200, a storage module 4500, and/or an input/output (I/O) module 4300. in the case of nodes A-C, data processor 4000 may include code, which configures CPU 4200 to function as a router or a switch. Furthermore, the router or switch may represent one or more nodes on the network.

The I/O module 4300 may include one or more input/output (I/O) devices including a display 4350, a keyboard, a mouse, an input storage device, and a network interface 4380. Network interface 4380 permits data processor 4000 to communicate through a network, such as communication channel 1120. For example, network interface 4380 may be embodied as an Ethernet network interface card or a wireless LAN interface card, such as a card compatible with the IEEE 802.11 series of wireless LAN standards. In some embodiments, display 4350 is separate from data processor 4000. For example, display 4350 may be provided on another data processor connected remotely to data processor 4000.

Central processing unit 4200 may include, for example, one or more of the following: a central processing unit, a co-processor, memory, registers, and other processing devices and systems as appropriate. Moreover, unit 4200 (or associated memory) may include source code (not shown) that configures data processor to function as a router to route packets, such as IP packets. Moreover, such code may include code to configure the router to function as a router in a VPN, such as a BGP/MPLS VPN, including associated PE nodes and CE nodes used in BGP/MPLS VPNs, (see, e.g., RFC-2547, "BGP/MPLS VPNs,").

Storage module 4500 may be embodied with a variety of components or subsystems capable of providing storage including, for example, a hard drive, an optical drive, a general-purpose storage device, a removable storage device, and/or memory. Moreover, storage module 4500 may include one or more of the following: network object information for each of the nodes of network 1000, inferred network objects, inferred services, QoS profile information for one or more nodes, performance information for the one or more nodes, and any other information associated with network 1000.

Although CPU 4200 is generally described in terms of data processor 4000, CPU 4200 may also be incorporated into any other data processing or communication device including, for example, a router, a switch, a gateway, a bridge, and/or a network management system. For example, in one embodiment, each of nodes A-C 1200, 1301-1302 are embodied as routers; INEs 1170-1171 are embodied as a data processor incorporated into a high performance core router; and NMS 1175 is embodied as a data processor, such as a high performance work station (e.g., a SUN Fire E25K Server or a SUN V12 80).

FIG. 5 depicts another exemplary flowchart with steps for determining performance consistent with another embodiment of the present invention. Referring to FIGs. 2 and 5, INE 1170 may determine which tunnels to test based on information stored at NMS 1175 (step 5100), with the tunnel corresponding to a service provided to a customer. Next, INE 1170 may determine a QoS profile for the customer's interface (e.g., interface A 1201) by querying PE Router A 1200 (step 5200). INE 1170 may then configure an interface (e.g., interface C 203) at PE Router 1200 to have a similar QoS profile as interface A 201, which is the interface under test (step 5300). INE 1170 may also determine the injection criteria for the determined QoS profile (step 5400). Specifically, packets received at an interface with the determined QoS profile are processed with one or more rules (also referred to as "injection criteria") that specify the criteria for allowing packets to access a BGP/MPLS tunnel between PE Router A 1200 and PE Router B 1301. Next, INE 1170 generates packets that satisfy the determined injection criteria and then sends the generated packets to PE Router 1200 via link 1121 and interface C 203 (step 5500). Based on an injection criteria, PE Router A 1200 sends the generated packets to a BGP/MPLS tunnel between PE Router A 1200 and PE Router B 1301. Specifically, only packets that satisfy the QoS profile and corresponding injection criteria will be allowed access to the BGP/MPLS tunnel. INE 1171 then receives the generated packet from INE 1170, interface C 203, PE Router A 1200, network 1120, PE Router B 1301, and link 1122. INE 1171 may then initiate a test to determine performance based on one or more packets received from INE 1170 (step 5600). If there are other interfaces at PE Router A 1200, INE 1170 may then test, using steps 5100-5600, those other interfaces (step 5700). If there are other nodes, INE 1170 may then test, using steps 5100-5600, those other nodes and their corresponding interfaces (step 5800). Otherwise, processing is complete.

FIG. 6 depicts the exemplary network environment of FIG. 2 with additional nodes. Network 1120 is depicted as one or more links 450-482. Moreover, INE 1170 is attached to the Ethernet interface of PE node D 452.

Referring to FIG. 6, $CE_A$ represents a customer with traffic (e.g., VoIP packets). Customer $CE_A$ 2060 may have a service level agreement (SLA) with a network service provider. The SLA enables the customer to access a traffic-engineered tunnel(s) between PE node A 1200 and PE node B 1301. Typically, such tunnels are shared across multiple customers (e.g., customers A and B 2060-2066) based on the agreed level of service associated with each customer and on the type of traffic that originates from each customer. For example, customer $CE_A$ 2060 may contract for "Platinum" level service with the network service provider. The Platinum QoS level may specify performance parameters (e.g., availability, delay, and packet loss) sufficient to satisfy the customer's delay sensitive VoIP voice traffic. On the other hand, the customer may contract for a different service level for other traffic, such as email, video, etc. For example, the customer may have a SLA that specifies a lower, best efforts service ("Bronze" service) for email. Similarly, customer $CE_B$'s 2061 may contract for "Platinum" level service for delay sensitive traffic, such as Voice Over IP (VoIP) traffic. In this example, both $CE_A$'s VoIP traffic and $CE_B$ VoIP traffic may use the same tunnel between PE node A 1200 and PE anode B 1301 since that tunnel has been engineered to satisfy VoIP traffic.

FIG. 7 depicts network 6000 with a tunnel 7100, such as a BGP/MPLS tunnel between PE node A 1200 to PE node B 1301. Referring to FIGs. 5 and 7, INE 1170 may determine which tunnels to test based on information stored at NMS 1175 (step 5100), with the tunnel representative of a service provided to a customer. As noted above, $CE_A$ 2060 may have VoIP packet traffic for routing from PE Router A 1200 to PE Router B 1301 over tunnel 7100. Moreover; the VoIP traffic may represent a service provided by a network service provider and guaranteed to satisfy a SLA, which specifies, inter alia, performance (e.g., availability, latency, packet loss, jitter, and the like).

Although INE 1170 may directly connect to PE Router A 1170 (as depicted in FIG. 2), FIG. 7 depicts a virtual connection (through a tunnel 7200) between INE 1170 and PE Router A 1200. For example, INE 1170 may establish a virtual connection to PE Router A using a variety of techniques including, for example, a GRE (Generic Routing Encapsulation, RFC-2784) protocol, IP encapsulation within IP (also referred to as IP-IP tunneling), a VLAN (Virtual Local Area Network), and ATM PVC (Asynchronous Transfer Mode Permanent Virtual Circuit). One of ordinary skill in the art will recognize that commercial software and/or hardware is available to establish such connections between nodes in a network. When GRE is used, INE 1170 may implement the Linux operating system with different IP addresses as "aliases" of the main INE 1170 IP address so that multiple GRE tunnels can be created between INE 1170 and PE Router A 1200. Although the description made herein refers to the use of GRE tunnel 7200, any other connection mechanism may be used instead including VLAN mechanisms.

To compensate for any packet loss, latency, and/or jitter characteristic introduced by the GRE tunnel 7200 from INE 1170 to PE Router A, in some embodiments two such tunnels 7200, 7201 are implemented to conduct a loop back test to characterize the GRE portion of the network. The characterization enables INE 1171 to remove the jitter, packet loss, latency contributions of the GRE tunnel 7200 from the tunnel of interest 7100.

INE 1170 may determine a QoS profile for the customer $CE_A$ 2060 at PE Router A 1200 by querying the router (step 5200) or reading the profile information from NMS 1175. INE 1170 may then configure another interface at PE Router A 1200 to have a similar (or the same) QoS profile as customer $CE_A$'s interface ("interface under test") (step 5300). INE 1170 may also determine the injection criteria for the determined QoS profile (step 5400). In particular, the injection criteria at PE Router A specify the type of packets that are allowed access to tunnel 7100. For example, customer $CE_A$'s VoIP packets may be allowed access to tunnel 7100, but email packets may be denied.

Next, INE 1170 generates packets (step 5500) that satisfy the determined injection criteria and sends the generated packets to PE Router A 1200 via link 1121 and interface 203 (not shown). Returning to the above example, INE 1170 may generate packets that are similar to VoIP packets (e.g., similar header, structure, and/or size). INE 1170 then sends the generated packets through GRE tunnel 7200 to PE Router A 1201. PE Router A 1201 then applies its injection criteria to the received packets, which should allow the generated packets to be granted access to tunnel 7100 (just like $CE_A$'s VoIP packets which are granted access to tunnel 7100). When INE 1170 generates packets that are "similar" to packets received at the interface under test from $CE_A$, INE 1170 generates packets that are similar with respect to the injection criteria. For example, if packets received at the interface under test are injected into tunnel 7100 solely based on a specific header field (e.g., a DSCP field value), INE 1170 would generate packets that are similar with respect to having at least the same header field as the interface under test packets.

The injection criteria may use the DSCP bits (for IP packets), EXP (for MPLS), Layer 2 information (VLAN-ID, logical L2 interface, L2 priority, etc.), and/or Layer 3+ information (protocol numbers, ports, transport layer status, etc.) to route a packet to a tunnel (or route) that satisfies the required (or specified) QoS for that packet. The injection criteria thus provide rules for packet selection and injection on to a route, such as a tunnel.

In some embodiments, a service provider may define three levels of QoS. The three service levels may consist of Best Efforts (BE), Expedited Forwarding (EF), and Assured Forwarding (AF). Specifically, IP routing traffic may receive BE service, voice may receive EF service, and video/multimedia signaling data and priority data may receive AF service.

For BE, a service provider may specify a default injection criteria that routes traffic to predetermined path(s), such as a BGP/MPLS tunnel. Moreover, the service provider may establish the path by specifying or configuring one or more of the following: rate (bandwidth), depth (available buffer space in a queue), Rmax (queue length at which there is a 100% probability of dropping a packet), peak rate (peak rate for a link), minimum policed unit (see, e.g. RFC-2212, "Specification of Guaranteed Quality of Service," S. Shenker, September 1997), Maximum packet size (as configured or a default if not configured at the router); $R_{min}$ (queue length at which there is a 0% probability of dropping a packet), Slope (value used to compute drop probability between $R_{min}$ and $R_{max}$), and a packet discard flag. For EF, a service provider may define another set of tunnels for packets satisfying the following injection criteria: EXP, DSCP, ILM (Incoming Label Map), VRF, IP Protocol (L3+), etc. In the case of AF, a service provider may define yet another set of tunnels for packets satisfying other injection criteria values. Like the BE case, a service provider may establish the EF and AF paths to have specific parameters, such as rate, depth, etc.

Returning to packet generation step 550, PE Router B 1301 receives the generated packets from tunnel 7100 and routes those packets to GRE tunnel 7204 and INE 1171. INE 1171 may then initiate tests of the received packet(s) to determine performance (step 5600). Moreover, in one embodiment, INE 1171 removes the packet loss, jitter, and latency effects of the GRE tunnels 7204 and 7200, so that the determined performance measurements represent only tunnel 7100.

One way to correct for the GRE tunnel portion 7200 is to use the traditional "ping" protocol utility (from the INE to the PE) on the GRE Tunnel 7200 arid use the results to correct for the error introduced by the GRE tunnel 7200. Another ping can be performed over GRE tunnel 7204. The results of the ping tests, which provide time to traverse the tunnels, can be used to remove the effects of each of tunnels 7200 and 7204. A more accurate approach is to use a loop back (also referred to as a second tunnel approach). For example, to correct for GRE tunnel 7200, tunnel 7201 is established, and to correct for tunnel 7204, tunnel 7203 is established, as shown in FIG. 7.

FIG. 8 depicts the tests performed by INE 1170 and 1171 to reduce (if not eliminate) the effects of GRE tunnels 7200 and 7204. Since 7200 and 7204 are not part of the path (i.e., tunnel 7100) for the interface of under test, the jitter, latency, and packet loss effects of GRE tunnels 7200 and 7204 should be removed from performance calculations made for the interface under test. In one embodiment, INE 1171 determines the time T1, which represents the end-to-end latency (time) measured between INE 1170 (as source) to INE 1171 (as destination). INE 1170 then determines time T2 by performing a loop back test, sending one or more packets (with time stamps) to tunnel 7200, PE Router A 1200, and returning on tunnel 7201. Meanwhile, INE 1171 determines time T3 by performing a loop back test, sending one or more packets (with time stamps) to tunnel 7203, PE Router B 1301, and returning on tunnel 7204.

Next, INE 1171 determines the value of "$l_2$" which represents the latency between PE Routers A and B. In one embodiment, the value of $l_2$ is determined based on the following equations:

$$l_1 + l_2 + l_3 = T_1 \qquad \text{Equation (1)}$$

and

$$l_2 = T_1 - (l_1 + l_3) \qquad \text{Equation (2)}$$

where $l_1$ represents the latency between INE 1170 and PE Router A 1200; $l_2$ represents the latency between PE Router A 1200 and PE Router B 1301; $l_3$ represents the latency between PE Router B 1301 and INE 1171; and $T_1$, represents, as noted above, the end-to-end latency time measured between INE 1170 (as source) and INE 1171 (as destination).

From the loop back tests above, the following equations can also be used:

$$l_1 + l_1' = T_2 \qquad \text{Equation (3)}$$

and

$$l_3 + l_3' = T_3 \qquad \text{Equation (4);}$$

where $l_3'$ represents latency between router 1301 and INE 1171; and $l_2'$ represents latency between router 1200 and INE 1700.

Moreover, if the following is assumed to be true:

$$l_1 \approx l_1' \text{ and } l_3 \approx l_3'.$$

The equations for $l_1$ and $l_3$ can be determined as follows:

$$l_1 = T_2/2 \text{ and } l_3 = T_3/2 \qquad \text{Equations (5) and (6).}$$

Based on Equations 2, 5 and 6, the latency $l_2$ of only tunnel 7100 (excluding the effects of the GRE tunnels 7200-7204) can be determined based on the following equation:

$$l_2 = T_1 - (T_2 + T_3)/2 \qquad \text{Equation (7).}$$

In some embodiments, the generated test packets are time stamped to facilitate performance testing, as note above. In these cases, the time stamp may be applied at the INE 1170 or PE Router A 1200. To reduce unwanted latency and reduce indeterminism, the time stamp may be applied to a packet at (or near) network interface 204 of PE Router A 1200 rather than at INE 1170.

Furthermore, if a time stamp is affixed to one or more packets at periodic intervals, the timing and packet loss can readily be determined. For example, if an INE generates a packet with a corresponding time stamp every one millisecond, the receiving INE can determine if a packet is missing-representing a packet loss-and the timing associated with the packet loss.

If there are other interfaces at PE Router A 201, INE 1170 may then test, using steps 5100-5600, each of those other interfaces (step 5700). If there are other nodes, INE 1170 may virtually connect to each of those nodes and then test each of those nodes (e.g., PE E 453) using steps 5100-5600 and their corresponding interfaces (step 5800).

FIG. 9 depicts another exemplary flowchart with steps for determining performance consistent with another embodiment of the present invention. Referring to FiGs. 2 and 9, INE 1170 may determine which tunnels correspond to a customer based on customer information stored at NMS 1175 (step 9100). For example, the customer information stored at NMS 1175 may indicate that Customer A is connected to PE Routers A and B 1200 and 1301 and there are tunnel(s) between the routers.

Next, INE 1170 may determine which one of the tunnels to test (step 9200). The determination of which tunnel to test may be based on information stored in NMS 1175 or may be driven by an event, such as an alarm, a failure, or degradation of network performance. Alternatively, the determination of which tunnel to test may be based on a schedule (e.g., hourly, daily, weekly, etc.), such as a user defined schedule stored in NMS 1175.

INE 1170 may determine a QoS profile for the customer's interface (e.g., interface A 1201) by querying PE Router A 1200, and then configure the interface (e.g., interface C 203) at PE Router 1200 to have a similar QoS profile (e.g., same rate, buffer size, etc.) as interface A 201, which is the interface under test (steps 9310-9410). Meanwhile, INE 1170 may determine the injection criteria for the determined QoS profile, and then generate packets (steps 9305-9405). The generated packets are defined such that they should be treated by PE Router 1200 in a manner similar to the packets received from interface A 201, with, for example, the generated packets having similar (or the same structure) in terms of header and size. For example, the packets may have the same header fields (DSCP, EXP, etc.)

and protocols (e.g., protocol numbers), as the packets received from the customer's interface A 201, the interface under test.

When the configuration of interface C 203 and the generation of the packets is complete (steps 9405-9410), INE 1170 may then initiate a test of the interface under test, which in this case is interface A 201, by sending one or more packets from INE 1170 to INE 1171 through interface C 203, PE Router A, interface D 204, network 1120, PE Router 1301, and link 1122. If there are other tunnels to test, INE 1170 repeats steps 9100-9700 (step 9800). Some of the other tunnels may be at nodes other than node 1200. Otherwise, processing is complete.

FIG. 10 depicts another exemplary network environment 10000 consistent with the present invention. FIG. 10 includes a switch 10100. Switch 10100 may be any type of switch, such as an ATM switch, an Ethernet (e.g., Gigabit Ethernet) switch, or a wireless switch interface. In FIG. 10 switch 10100 serves as an interface between network 1120 and a second network (labeled local loop network) 10200. Network 10200 may be embodied in a manner similar to network 1120. Although network 10200 may be considered part of the same overall network as network 1120, in FIG. 10 functions as a separate network. For example, local loop network 10200 may be a wireless network for providing local access to customers, a local exchange carrier (LEC) network for providing local access to customers, or cable television drops to homes which provide local network access to customers.

When switch 10100 is present in network 1120, INE 1170 may connect to PE Router A 1200 through switch 10100. Moreover, when a test of a customer interface fails or shows degraded performance, INE 1170 (or NMS 1175) may "sectionalize" the failure by determining the performance of switch 10100. For example, if customer 2061 is having performance problems (e.g., cannot access customer 2604), INE 1170 (or NMS 1175) may be able to determine which section of the overall network is causing the problem. If an SNMP query of switch 10100 determines that the switch is operating correctly, INE 1170 may identify a cause within another "section" of network 1120. On the other hand, if an interface on switch 10100 is not operating correctly (e.g., shows degraded performance in terms of jitter, latency, or packet loss), INE 1170 may identify the cause as the local loop network 10200 "section" (or possibly the switch 10100 itself). In some embodiments, the use of switch 10100 may also improve latency measurements between INE 1170 and PE Router A 1200 (e.g., where the link includes a more deterministic switch 10100).

Furthermore, in some embodiments, INEs 1171 and 1170 may emulate one or more aspects of a CE router, as specified in RFC-2547 titled "BGP/MPLS VPNs."

## Claims

1. A method of testing a first node having at least a first interface, the method comprising:

   configuring a second interface (203) at the first node (1200) that includes the first interface (201), such that the configured second interface (203) on the first node (1200) includes one or more quality of service parameters (QoS) being the same as the quality of service parameters (QoS) of the first interface (201) on the first node (1200);
   sending one or more packets through the configured second interface (203) on the first node (1200), the one or more packets having the same type as packets typically received at the first interface on the first node (1200);
   receiving the one or more packets, and
   determining, based on the one or more received packets, one or more performance parameters corresponding to the first interface (201) on the first node (1200) under test.

2. The method of claim 1, wherein the one or more quality of service parameters include one or more quality of service parameters representative of at least one of the following: a latency, a jitter, and a packet loss.

3. The method of claim 1 or 2, including determining at least one of the one or more quality of service parameters by querying the first node.

4. The method of any of the above claims, including determining at least one of the one or more quality of service parameters based on inferred services.

5. The method of any of the above claims, wherein the first node (1200) serves as a Provider Edge (PE) router connected to a Customer Edge (CE) router (2060), and each of the first and second interfaces includes an Ethernet interface

6. The method of any of the above claims, including determining one or more rules based on the one or more quality of service parameters, and routing a packet to a tunnel (7100) when the packet satisfies at least one of the one or more rules.

7. The method of claim 6, wherein the one or more rules include a set of injection criteria.

8. The method of claims 6 or 7, including generating, at a second node (1170), one or more packets that satisfy at least one of the one or more rules, the generated one or more packets being routed by the first node from the second interface to the tunnel as if the generated packets had been received at the first interface.

9. The method of claim 8, wherein at least one of the one or more packets includes a packet header similar to another packet received at the first interface.

10. The method of claim 9, wherein the packet header includes an EXP field of an MPLS (Multi-Protocol Label Switching) packet, and the EXP field is the same as the EXP field of another packet received at the first interface.

11. The method of claims 8, 9, or 10, wherein at least one of the one or more packets includes a payload type similar to another packet received at the first interface.

12. The method of any of claims 8 to 11, wherein the generated packets are routed from the second interface (203) to the tunnel (7100) based on at least one of the one or more rules, the tunnel serving as a virtual path through a network to an other node (1301), different than the first and second nodes.

13. The method of claim 12, including receiving the generated packets at the other node.

14. The method of claim 13, including determining one or more performance parameters based on the packets received at the other node.

15. The method of any of the above claims, including connecting to the first node (1200).

16. The method of any of the above claims, including connecting to the first node (1200) through a switch (10100) serving as an interface to a local network.

17. The method of any of the above claims, including connecting to the first node (1200) through a tunnel (7200).

18. The method of any of the above claims, including establishing a tunnel (7200) to the first node (1200) based on at least one of a Generic Routing Encapsulation (GRE) protocol, an IPSec (Internet Protocol Security) protocol, a VLAN protocol, and an IP encapsulation within IP (IP-in-IP) protocol.

19. The method of claims 17 or 18, including determining the one or more performance parameters by calculating latency contribution corresponding to the established tunnel (7200).

20. The method of any of the above claims, including selecting the first interface based on a schedule stored at a centralized processor for managing a network.

21. The method of any of the above claims, including configuring the second interface (203) to have service parameters similar to an other interface (202), separate fin the first (201) and second (203) interfaces.

22. The method of claim 21, including determining one or more performance parameters for the other interface (202).

23. A computer-readable medium containing instructions to configure a data processor to perform the method of any of the above claims.

24. A system for testing a first node having at least a first interface, the system comprising:

means (1170) for configuring a second interface (203) at the first node (1200) that includes the first interface (201), such that the second interface (203) on the first node (1200) has one or more quality of service parameters (QoS) being the same as the quality of service parameters (QoS) of the first interface (201) on the first node (1200);

**Patentansprüche**

1. Eine Methode zur Prüfung eines ersten Knotens mit mindestens einer ersten Schnittstelle, wobei die Methode Folgendes enthält:

   die Konfigurierung einer zweiten Schnittstelle (203) am ersten Knoten (1200), der die erste Schnittstelle (201) einschließt, sodass die konfigurierte zweite Schnittstelle (203) am ersten Knoten (1200) einen oder mehrere Dienstgüteparameter (QoS) einschließt, welche mit den Dienstgüteparametern (QoS) der ersten Schnittstelle (201) am ersten Knoten (1200) gleich sind;
   das Senden eines oder mehrere Pakete durch die konfigurierte zweite Schnittstelle (203) am ersten Knoten (1200), wobei das eine oder mehrere Pakete vom gleichen Typ sind wie Pakete, die normalerweise an der ersten Schnittstelle des ersten Knotens (1200) empfangen werden;
   das Empfangen des einen oder mehrerer Pakete und
   ausgehend von dem einen oder mehreren empfangenen Paketen, das Bestimmen eines oder mehrerer Leistungsparameter, welche der ersten Schnittstelle (201) am ersten Knoten (1200) im Test entsprechen.

2. Die Methode aus Patentanspruch 1, wobei der eine oder mehrere Dienstgüteparameter einen oder mehrere Dienstgüteparameter einschließen, die mindestens eines von Folgendem darstellen: Latenz, Jitter und Paketverlust.

3. Die Methode aus Patentanspruch 1 oder 2, einschließlich der Bestimmung von mindestens einem der ein oder mehreren Dienstgüteparameter durch Anfrage an den ersten Knoten.

4. Die Methode eines der obigen Patentansprüche, einschließlich der Bestimmung von mindestens einem der ein oder mehreren Dienstgüteparameter auf der Grundlage von geschlussfolgerten Dienstleistungen.

5. Die Methode aus einem der obigen Patentansprüche, wobei der erste Knoten (1200) als Provider Edge (PE) Router dient, der an einen Customer Edge (CE) Router (2060) angeschlossen ist, und jede der ersten und zweiten Schnittstellen eine Ethernet-Schnittstelle einschließt.

6. Die Methode eines der obigen Patentansprüche, einschließlich der Bestimmung einer oder mehrerer Regeln auf der Grundlage des einen oder mehrerer Dienstgüteparameter und des Routings eines Pakets in einen Tunnel (7100), wenn das Paket mindestens eine der ein oder mehreren Regeln erfüllt.

7. Die Methode aus Patentanspruch 6, wobei die eine Regel oder mehrere Regeln einen Satz Injektionskriterien enthalten.

8. Die Methode aus Patentansprüchen 6 oder 7, einschließlich des Erzeugens eines oder mehrerer Pakete an einem zweiten Knoten (1170), die mindestens eine der ein oder mehreren Regeln erfüllen, und wobei das erzeugte eine oder die erzeugten mehreren Pakete durch den ersten Knoten von der zweiten Schnittstelle zu dem Tunnel geroutet werden als ob die erzeugten Pakete an der ersten Schnittstelle empfangen worden wären.

9. Die Methode aus Patentanspruch 8, wobei mindestens eines der ein oder mehreren Pakete einen Paket-Header enthält, der einem anderen an der ersten Schnittstelle empfangenen Paket gleicht.

10. Die Methode aus Patentanspruch 9, wobei der Paket-Header ein EXP-Feld eines MPLS-Pakets (Multi-Protocol Label Switching) enthält und das EXP-Feld das Gleiche ist wie das EXP-Feld eines anderen an der ersten Schnittstelle empfangenen Pakets.

11. Die Methode aus Patentanspruch 8, 9 oder 10, wobei mindestens eines der einen oder mehrerer Pakete einen Nutzdatentyp enthält, der einem anderen an der ersten Schnittstelle empfangenen Paket gleicht.

12. Die Methode aus einem der Patentansprüche 8 bis 11, wobei die erzeugten Pakete auf der Grundlage mindestens einer der einen oder mehrerer Regeln von der zweiten Schnittstelle (203) zum Tunnel (7100) geroutet werden und wobei der Tunnel als virtueller Pfad durch ein Netz zu eine anderen Knoten (1301) dient, die nicht die erste oder zweite Knoten ist.

13. Die Methode aus Patentanspruch 12, einschließlich des Empfangens der erzeugten Pakete am anderen Knoten.

14. Die Methode aus Patentanspruch 13, einschließlich des Bestimmens eines oder mehrerer Leistungsparameter auf der Grundlage der am anderen Knoten empfangenen Pakete.

15. Die Methode aus einem der obigen Patentansprüche, einschließlich der Verbindung mit dem ersten Knoten (1200).

16. Die Methode aus einem der obigen Patentansprüche, einschließlich der Verbindung mit dem ersten Knoten (1200) durch einen Schalter (10100), der als Schnittstelle für ein lokales Netz dient.

17. Die Methode aus einem der obigen Patentansprüche, einschließlich der Verbindung mit dem ersten Knoten (1200) durch einen Tunnel (7200).

18. Die Methode aus einem der obigen Patentansprüche, einschließlich des Aufbaus eines Tunnels (7200) zum ersten Knoten (1200) auf der Grundlage mindestens eines Generic Routing Encapsulation (GRE) Protokolls, eines IPsec-Protokolls (Internet Protocol Security), eines VLAN-Protokolls und einer IP-Kapselung in einem IP-Protokoll (IP-in-IP).

19. Die Methode aus Patentanspruch 17 oder 18, einschließlich des Bestimmens des einen oder mehrerer Leistungsparameter durch Berechnen von Latenzbeiträgen, die dem aufgebauten Tunnel (7200) entsprechen.

20. Die Methode aus einem der obigen Patentansprüche, einschließlich der Wahl der ersten Schnittstelle auf der Grundlage eines bei einem zentralen Prozessor gespeicherten Plans zum Verwalten eines Netzes.

21. Die Methode aus einem der obigen Patentansprüche, einschließlich des Konfigurierens der zweiten Schnittstelle (203), derartig dass die Dienstparameter denen einer anderen Schnittstelle (202), die nicht die erste (201) und die zweite (203) Schnittstelle ist, gleichen.

22. Die Methode aus Patentanspruch 21, einschließlich des Bestimmens eines oder mehrerer Leistungsparameter für die andere Schnittstelle (202).

23. Ein computerlesbares Medium, das Anweisungen zum Konfigurieren eines Datenprozessors zum Ausführen der Methode aus einem der obigen Patentansprüche enthält.

24. Ein System zum Testen eines ersten Knotens mit mindestens einer ersten Schnittstelle, wobei das System Folgendes enthält:

   Mittel (1170) zur Konfigurierung einer zweiten Schnittstelle (203) am ersten Knoten (1200), der die erste Schnittstelle (201) einschließt, sodass die zweite Schnittstelle (203) am ersten Knoten (1200) einen oder mehrere Dienstgüteparameter hat, welche mit den Dienstgüteparametern (QoS) der ersten Schnittstelle (201) am ersten Knoten (1200) gleich sind;
   Mittel zum Senden (1170) eines oder mehrere Pakete durch die zweite Schnittstelle am ersten Knoten (1200), wobei das eine oder mehrere Pakete vom gleichen Typ sind wie Pakete, die normalerweise an der ersten Schnittstelle (201) des ersten Knotens (1200) empfangen werden;
   Mittel (1301, 1171) zum Empfangen des einen oder mehrerer Pakete und
   Mittel (1171) zum Bestimmen eines oder mehrerer Leistungsparameter, welche der ersten Schnittstelle am ersten Knoten (1200) im Test entsprechen, ausgehend von einem oder mehreren empfangenen Paketen.

**Revendications**

1. Une méthode de test d'un premier noeud ayant au moins une première interface, laquelle méthode comprend :

   la configuration d'une deuxième interface (203) au premier noeud (1200) qui inclut la première interface (201), de telle sorte que la deuxième interface configurée (203) au premier noeud (1200) comprend un ou plusieurs paramètres de qualité de service (QoS), étant les mêmes que les paramètres de qualité de service de la première interface (201) au premier noeud (1200) ;
   l'envoi d'un ou de plusieurs paquets à travers la deuxième interface configurée (203) au premier noeud (1200), le ou les paquets étant du même type que les paquets normalement reçus à la première interface du premier noeud (1200) ;

la réception du ou des paquets et
sur la base du ou des paquets reçus, la détermination d'un ou de plusieurs paramètres de performance correspondant à la première interface (201) sur le premier noeud (1200) faisant l'objet du test.

**2.** La méthode selon la revendication 1, dans laquelle le ou les paramètres de qualité de service comprennent un ou plusieurs paramètres de qualité de service représentatifs d'au moins un de ce qui suit : une latence, une fluctuation et une perte de paquet.

**3.** La méthode selon la revendication 1 ou 2, comprenant la détermination d'au moins un du ou des paramètres de qualité de service par interrogation du premier noeud.

**4.** La méthode selon n'importe laquelle des revendications ci-dessus, comprenant la détermination d'au moins un du ou des paramètres de qualité de service sur la base de qualité de services inférés.

**5.** La méthode selon n'importe laquelle des revendications ci-dessus, dans laquelle le premier noeud (1200) sert de Routeur côté Fournisseur (PE) connecté à un Routeur (2060) côté Client (CE), et chacune de la première et deuxième interface inclut une interface Ethernet.

**6.** La méthode selon n'importe laquelle des revendications ci-dessus, comprenant la détermination d'une ou de plusieurs règles basées sur un ou plusieurs paramètres de qualité de service et le routage d'un paquet vers un tunnel (7100) lorsque le paquet satisfait à au moins une ou plusieurs des règles.

**7.** La méthode selon la revendication 6, dans laquelle la ou les règles incluent un ensemble de critères d'injection.

**8.** La méthode selon la revendication 6 ou 7, y compris la génération à un deuxième noeud (1170) d'un ou de plusieurs paquets remplissant au moins une de la ou des règles et dans laquelle le ou les paquets générés est dirigé par le premier noeud depuis la deuxième interface vers le tunnel, comme si les paquets générés avaient été reçus à la première interface.

**9.** La méthode selon la revendication 8, dans laquelle au moins un du ou des paquets inclut un en-tête de paquet similaire à un autre paquet reçu à la première interface.

**10.** La méthode de la revendication 9, dans laquelle l'en-tête de paquet inclut un champ EXP d'un paquet MPLS (Multi-Protocol Label Switching) et le champ EXP est le même que le champ EXP d'un autre paquet reçu à la première interface.

**11.** La méthode selon la revendication 8, 9 ou 10, dans laquelle au moins un paquet inclut un type de charge utile similaire à un autre paquet reçu à la première interface.

**12.** La méthode selon n'importe laquelle des revendications de 8 à 11, dans laquelle les paquets générés sont dirigés depuis la deuxième interface (203) vers le tunnel (7100), sur la base d'au moins une de la ou des règles, le tunnel servant de chemin virtuel à travers un réseau, vers un autre noeud (1301) différant du premier et du second noeud.

**13.** La méthode selon la revendication 12, comprenant la réception des paquets générés à l'autre noeud.

**14.** La méthode selon la revendication 13, comprenant la détermination d'un ou de plusieurs paramètres de performance basés sur les paquets reçus à l'autre noeud.

**15.** La méthode selon l'une des revendications ci-dessus, comprenant la connexion avec le premier noeud (1200).

**16.** La méthode selon n'importe laquelle des revendications ci-dessus, comprenant la connexion au premier noeud (1200) par un commutateur (10100) servant d'interface à un réseau local.

**17.** La méthode selon n'importe laquelle des revendications ci-dessus, comprenant la connexion avec le premier noeud (1200) par un tunnel (7200).

**18.** La méthode selon n'importe laquelle des revendications ci-dessus, comprenant l'établissement d'un tunnel (7200) vers le premier noeud (1200) sur la base d'au moins un protocole parmi un protocole d'Encapsulation générique de Routage (GRE), un protocole IPsec (Internet Protocol Security), d'un protocole VLAN et un protocole d'encapsulation IP dans IP (IP-in-IP).

**19.** La méthode selon la revendication 17 ou 18, comprenant la détermination d'un ou de plusieurs paramètres de performance par le calcul de contributions de latence correspondant au tunnel établi (7200).

**20.** La méthode selon n'importe laquelle des revendications ci-dessus, comprenant la sélection de la première interface sur la base d'une régulation en mémoire dans un processeur central de gestion d'un réseau.

**21.** La méthode selon n'importe laquelle des revendications ci-dessus, comprenant la configuration de la deuxième interface (203), de telle façon qu'elle ait des paramètres de qualité de service similaires à une autre interface (202), distincte de la première (201) et de la deuxième (203) interface.

**22.** La méthode selon la revendication 21, comprenant la détermination d'une ou de plusieurs paramètres de performance pour l'autre interface (202).

**23.** Un support lisible par ordinateur renfermant des instructions pour configurer un processeur de données destiné à exécuter la méthode de n'importe laquelle des revendications ci-dessus.

**24.** Une méthode d'essai d'un premier noeud ayant au moins une première interface, lequel système comprend :

un moyen (1170) de configuration d'une deuxième interface (203) au premier noeud (1200) qui inclut la première interface (201), de telle sorte que la deuxième interface configurée (203) au premier noeud (1200) comprend un ou plusieurs paramètres de qualité de service (QoS), étant les mêmes que les paramètres de qualité de service de la première interface (201) au premier noeud (1200) ;
Moyen d'envoi (1170) d'un ou de plusieurs paquets à travers la deuxième interface au premier noeud (1200), le ou les paquets étant du même type que les paquets normalement reçus à la première interface (201) au premier noeud (1200) ;
Moyens (1301, 1171) de réception d'un ou de plusieurs paquets et
Moyen (1171) de détermination, sur la base du ou des paquets reçus, d'un ou de plusieurs paramètres de performance correspondant à la première interface (201) sur le premier noeud faisant l'objet du test (1200).

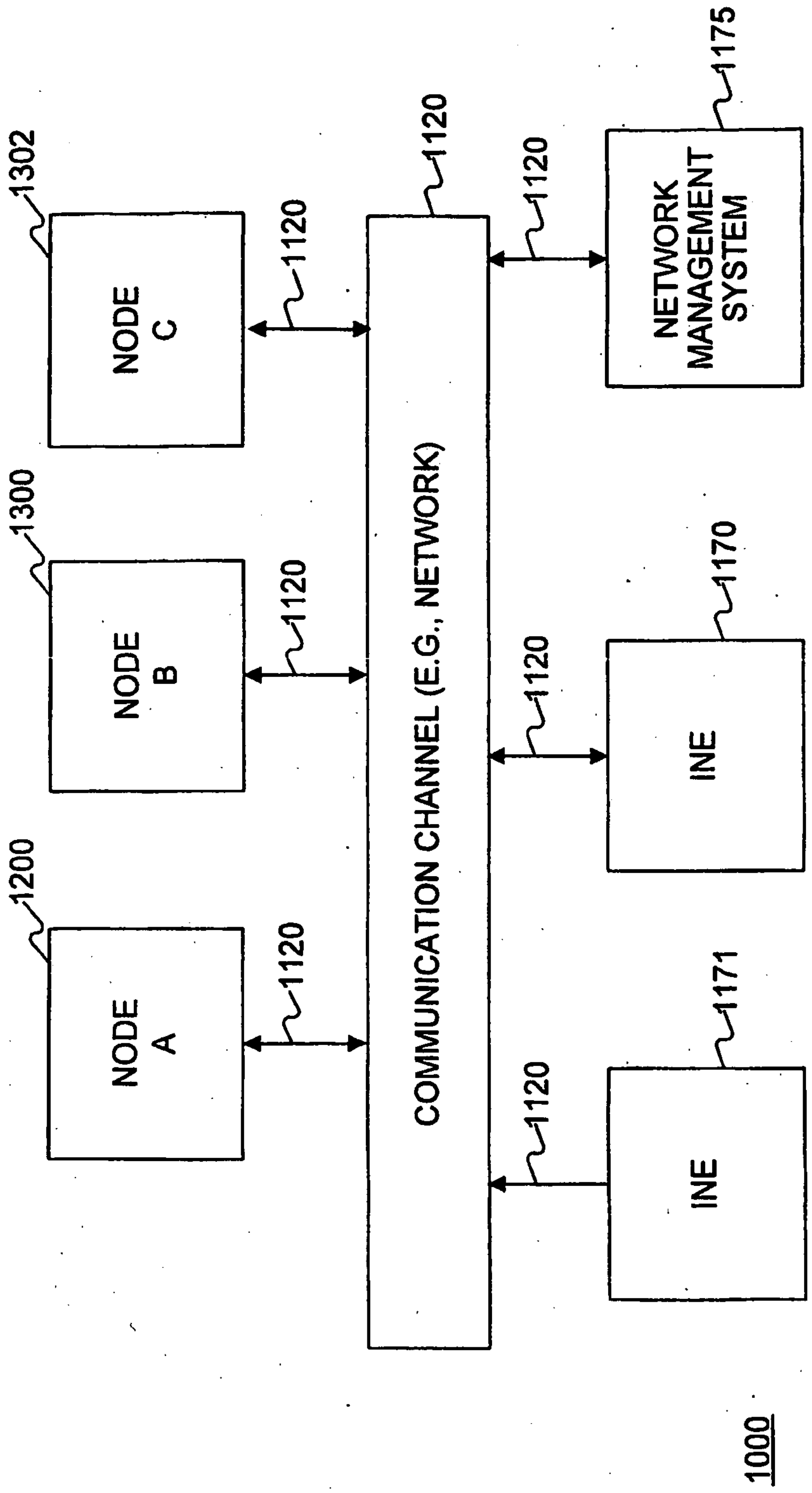
NODE A
1200
NODE B
1300
NODE C
1302
1120
COMMUNICATION CHANNEL (E.G., NETWORK)
INE
1171
INE
1170
NETWORK MANAGEMENT SYSTEM
1175
1000

FIG. 1

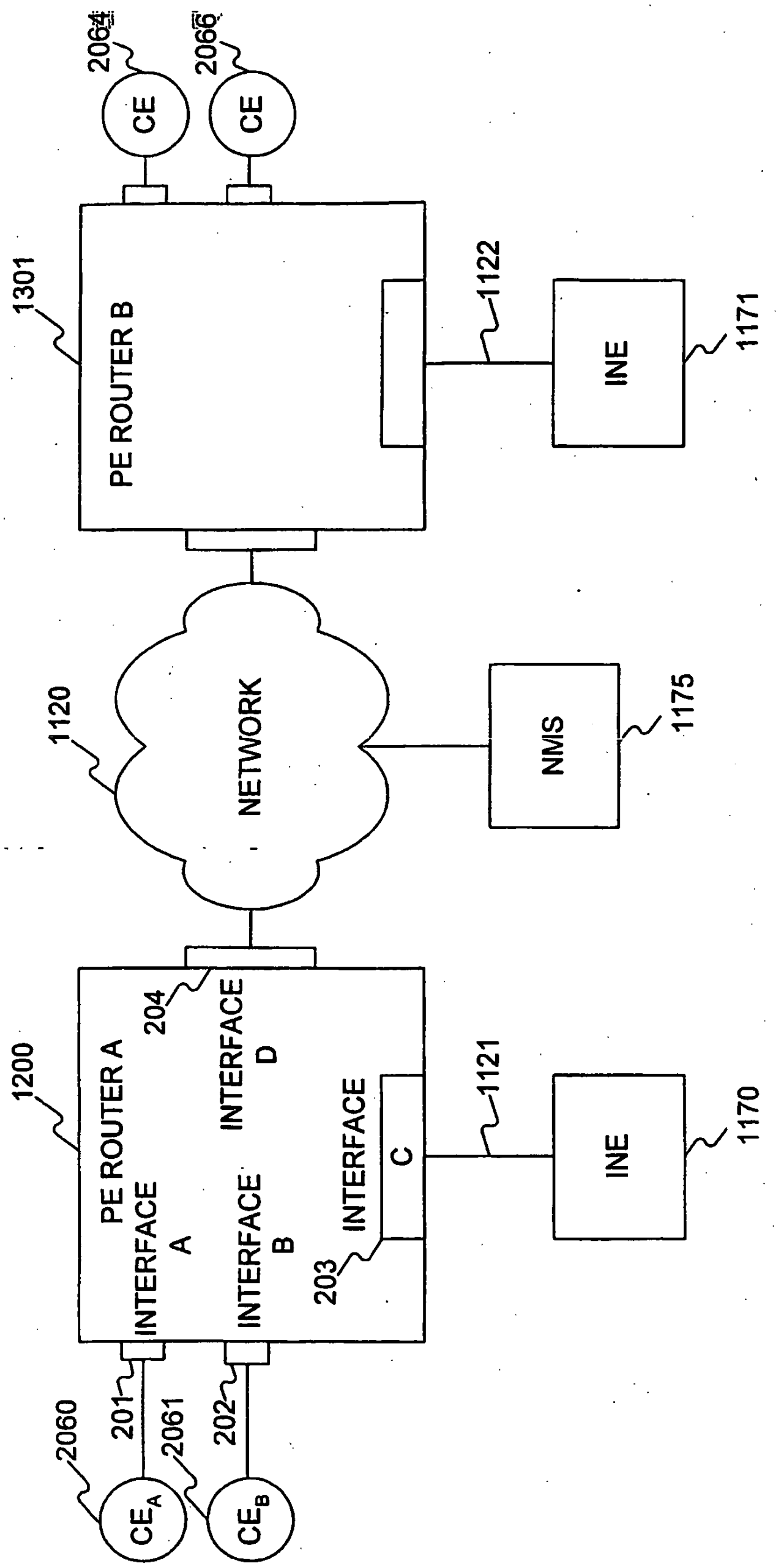
CE
2064
CE
2066
PE ROUTER B
1301
1122
INE
1171
NETWORK
1120
NMS
1175
PE ROUTER A
1200
INTERFACE A
INTERFACE B
INTERFACE C
INTERFACE D
201
202
203
204
1121
INE
1170
$CE_A$
$CE_B$
2060
2061

FIG. 2

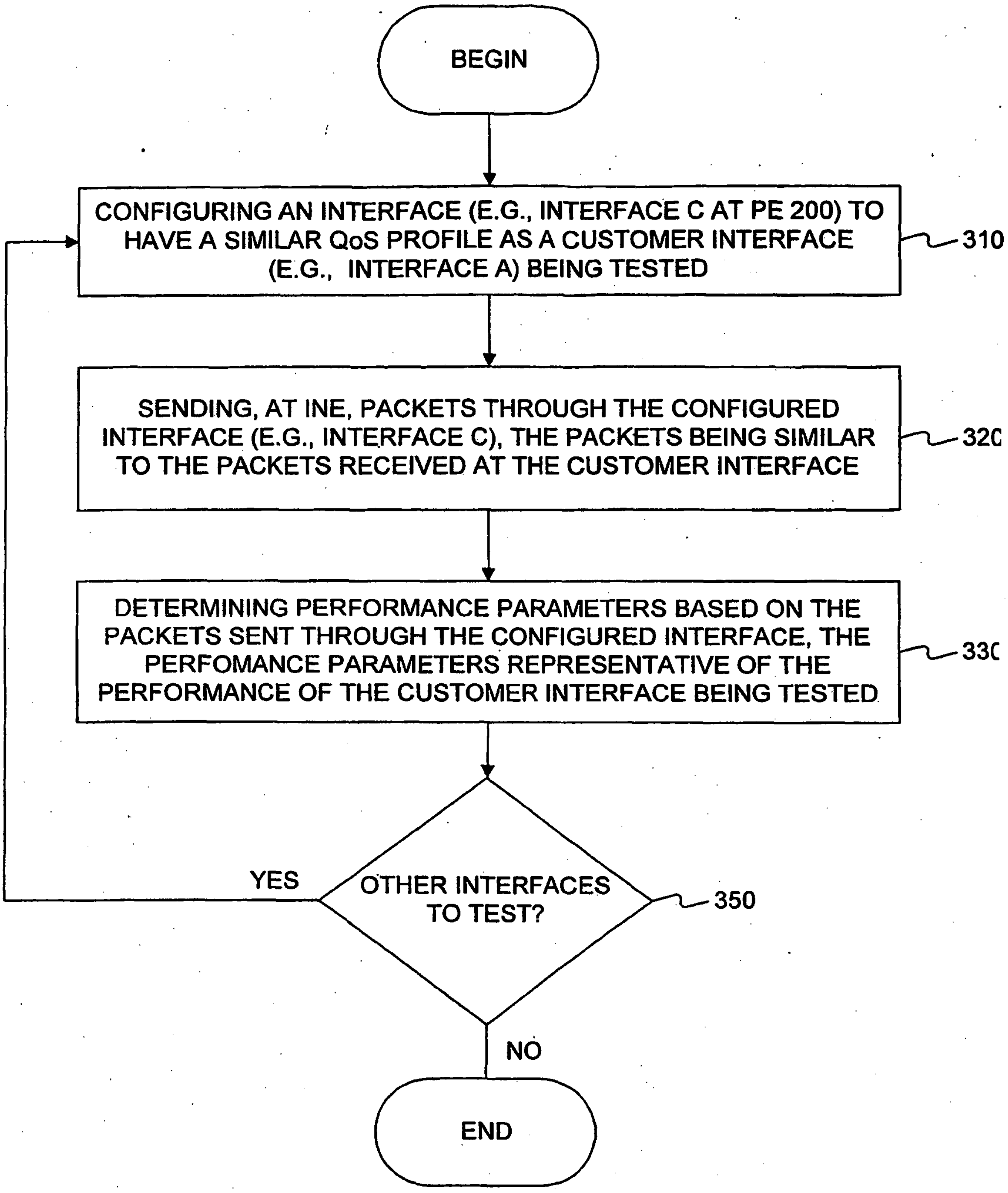
BEGIN
CONFIGURING AN INTERFACE (E.G., INTERFACE C AT PE 200) TO HAVE A SIMILAR QoS PROFILE AS A CUSTOMER INTERFACE (E.G., INTERFACE A) BEING TESTED
310
SENDING, AT INE, PACKETS THROUGH THE CONFIGURED INTERFACE (E.G., INTERFACE C), THE PACKETS BEING SIMILAR TO THE PACKETS RECEIVED AT THE CUSTOMER INTERFACE
320
DETERMINING PERFORMANCE PARAMETERS BASED ON THE PACKETS SENT THROUGH THE CONFIGURED INTERFACE, THE PERFOMANCE PARAMETERS REPRESENTATIVE OF THE PERFORMANCE OF THE CUSTOMER INTERFACE BEING TESTED
330
YES
OTHER INTERFACES TO TEST?
350
NO
END

FIG. 3

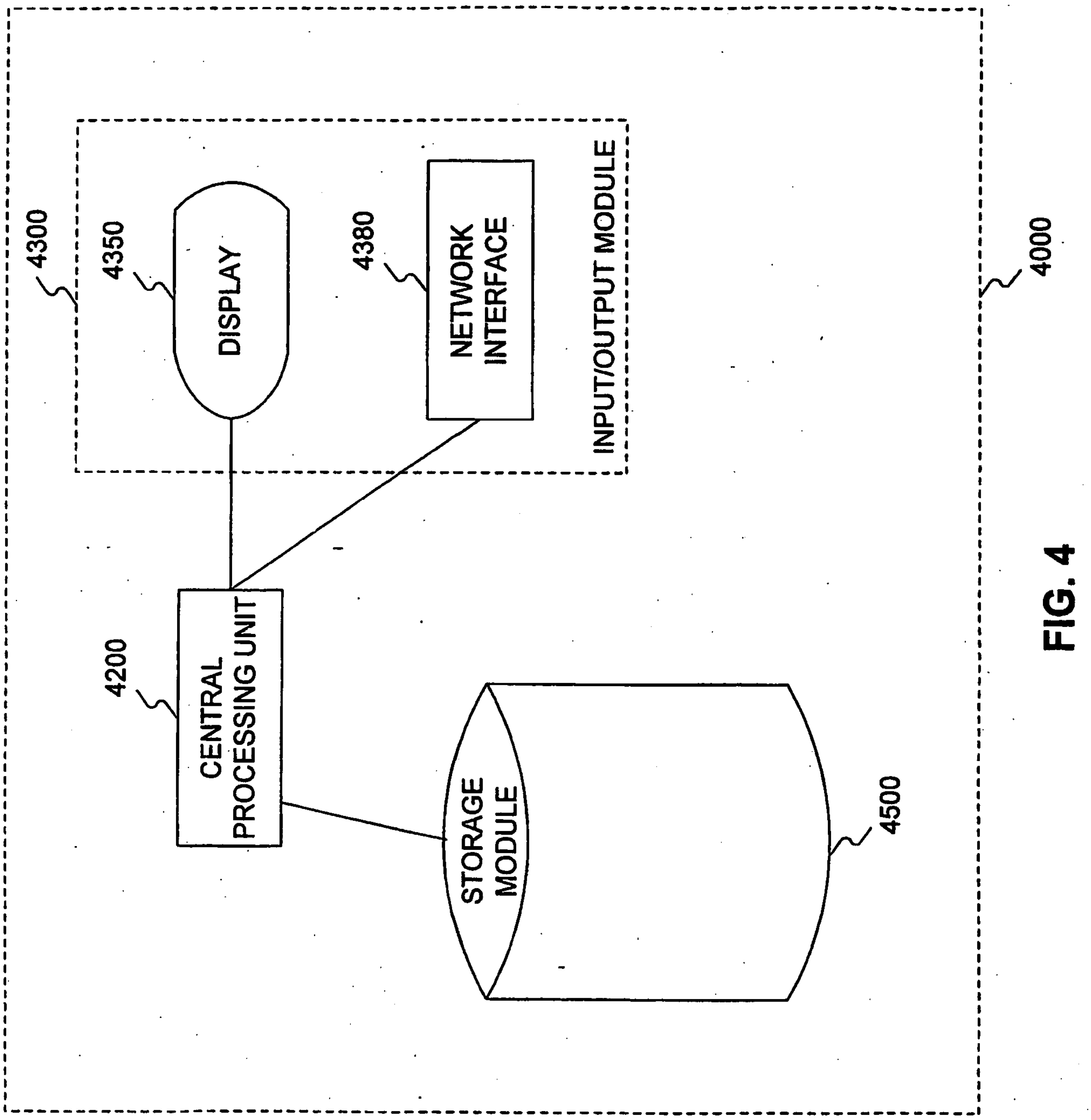
4300
4350
DISPLAY
4380
NETWORK INTERFACE
INPUT/OUTPUT MODULE
4200
CENTRAL PROCESSING UNIT
STORAGE MODULE
4500
4000

FIG. 4

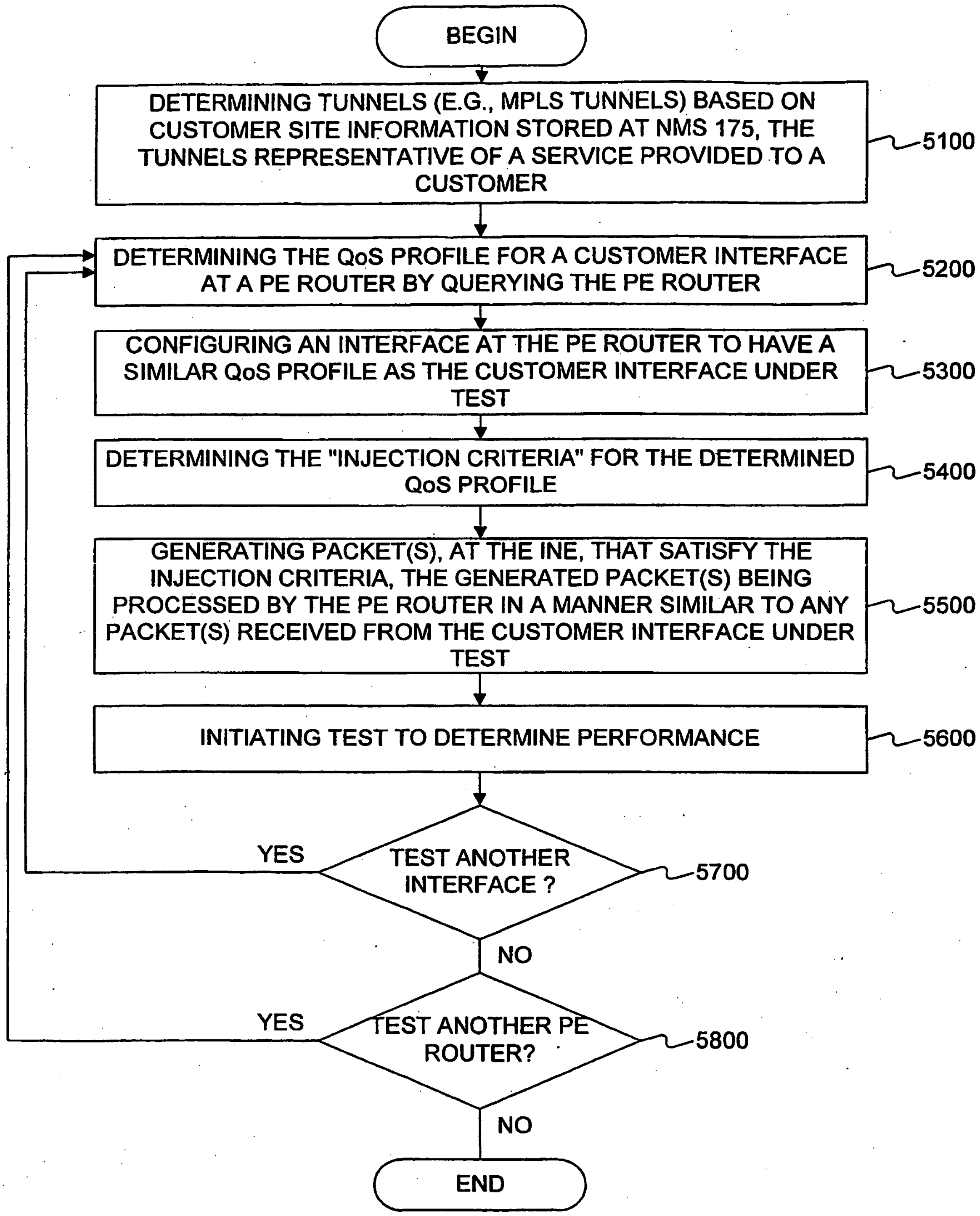
BEGIN
DETERMINING TUNNELS (E.G., MPLS TUNNELS) BASED ON CUSTOMER SITE INFORMATION STORED AT NMS 175, THE TUNNELS REPRESENTATIVE OF A SERVICE PROVIDED TO A CUSTOMER
5100
DETERMINING THE QoS PROFILE FOR A CUSTOMER INTERFACE AT A PE ROUTER BY QUERYING THE PE ROUTER
5200
CONFIGURING AN INTERFACE AT THE PE ROUTER TO HAVE A SIMILAR QoS PROFILE AS THE CUSTOMER INTERFACE UNDER TEST
5300
DETERMINING THE "INJECTION CRITERIA" FOR THE DETERMINED QoS PROFILE
5400
GENERATING PACKET(S), AT THE INE, THAT SATISFY THE INJECTION CRITERIA, THE GENERATED PACKET(S) BEING PROCESSED BY THE PE ROUTER IN A MANNER SIMILAR TO ANY PACKET(S) RECEIVED FROM THE CUSTOMER INTERFACE UNDER TEST
5500
INITIATING TEST TO DETERMINE PERFORMANCE
5600
TEST ANOTHER INTERFACE ?
YES
NO
5700
TEST ANOTHER PE ROUTER?
YES
NO
5800
END

FIG. 5

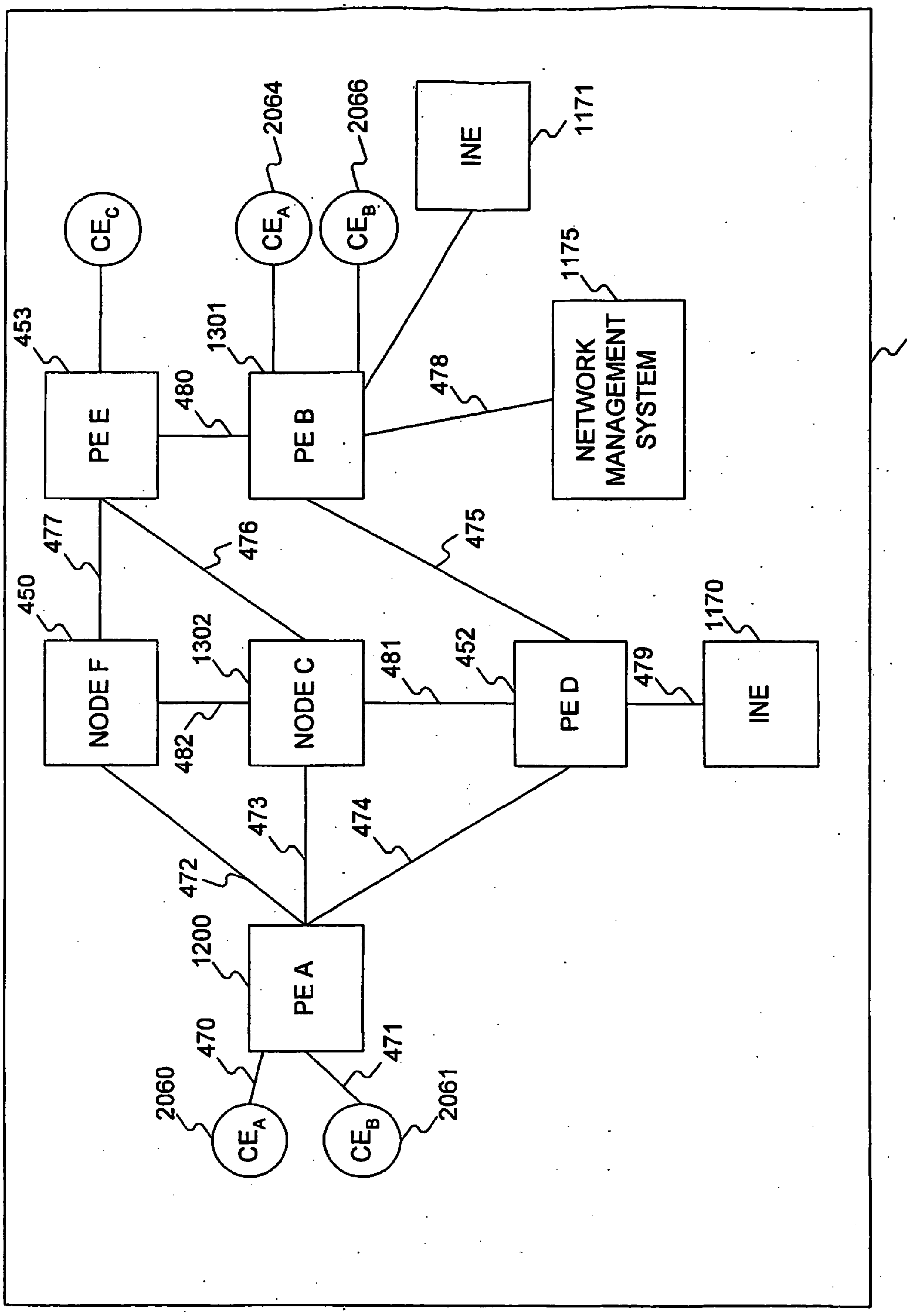
PE A
PE B
PE D
PE E
NODE C
NODE F
INE
INE
NETWORK MANAGEMENT SYSTEM
CE_A
CE_B
CE_C
CE_A
CE_B
470
471
472
473
474
475
476
477
478
479
480
481
482
450
452
453
1200
1301
1302
1170
1171
1175
2060
2061
2064
2066
6000

FIG. 6

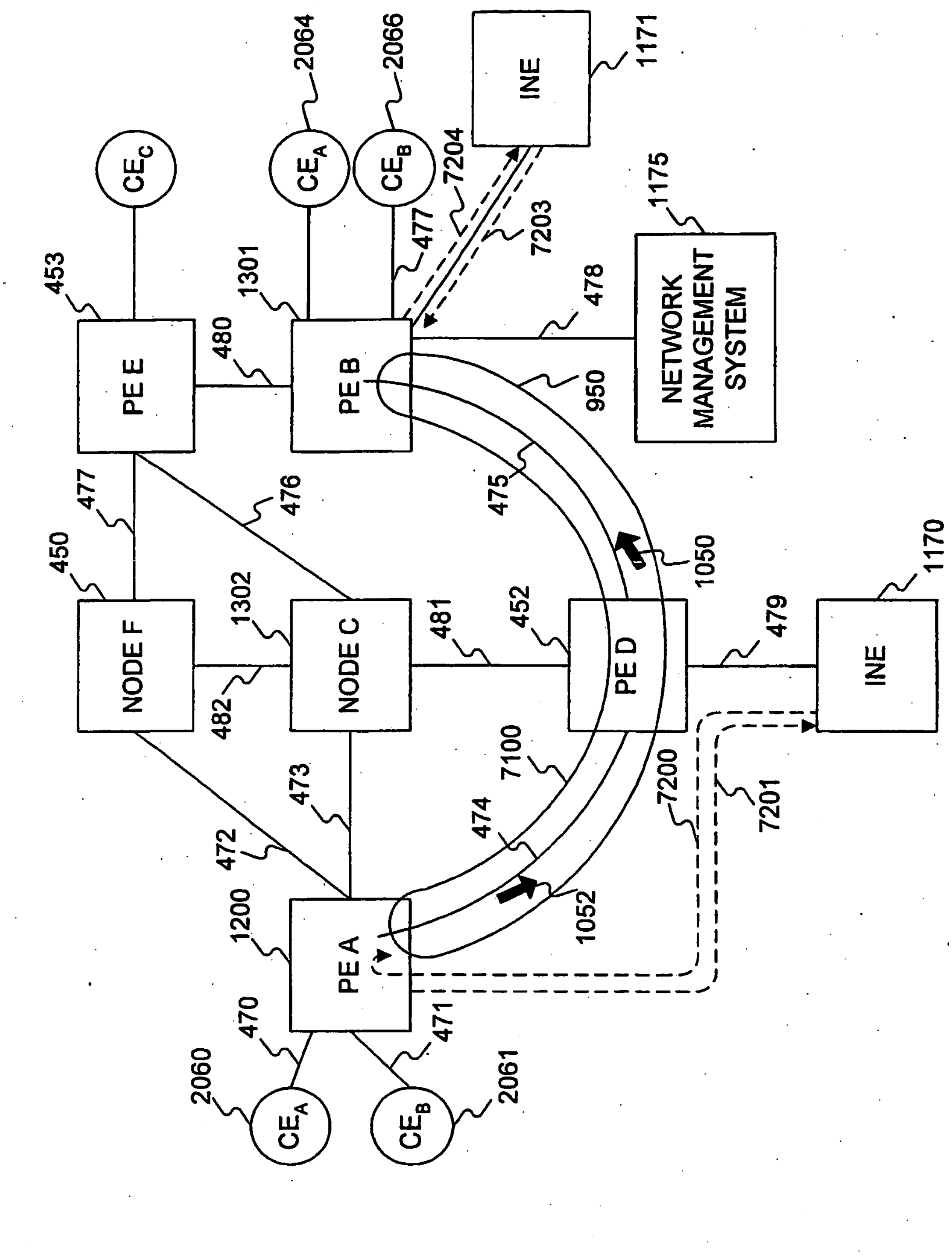
PE A
PE B
PE D
PE E
NODE C
NODE F
INE
INE
NETWORK MANAGEMENT SYSTEM
CE_A
CE_B
CE_A
CE_B
CE_C
2060
2061
2064
2066
470
471
472
473
474
475
476
477
477
478
479
480
481
482
450
452
453
950
1050
1052
1170
1171
1175
1200
1301
1302
7100
7200
7201
7203
7204

FIG. 7

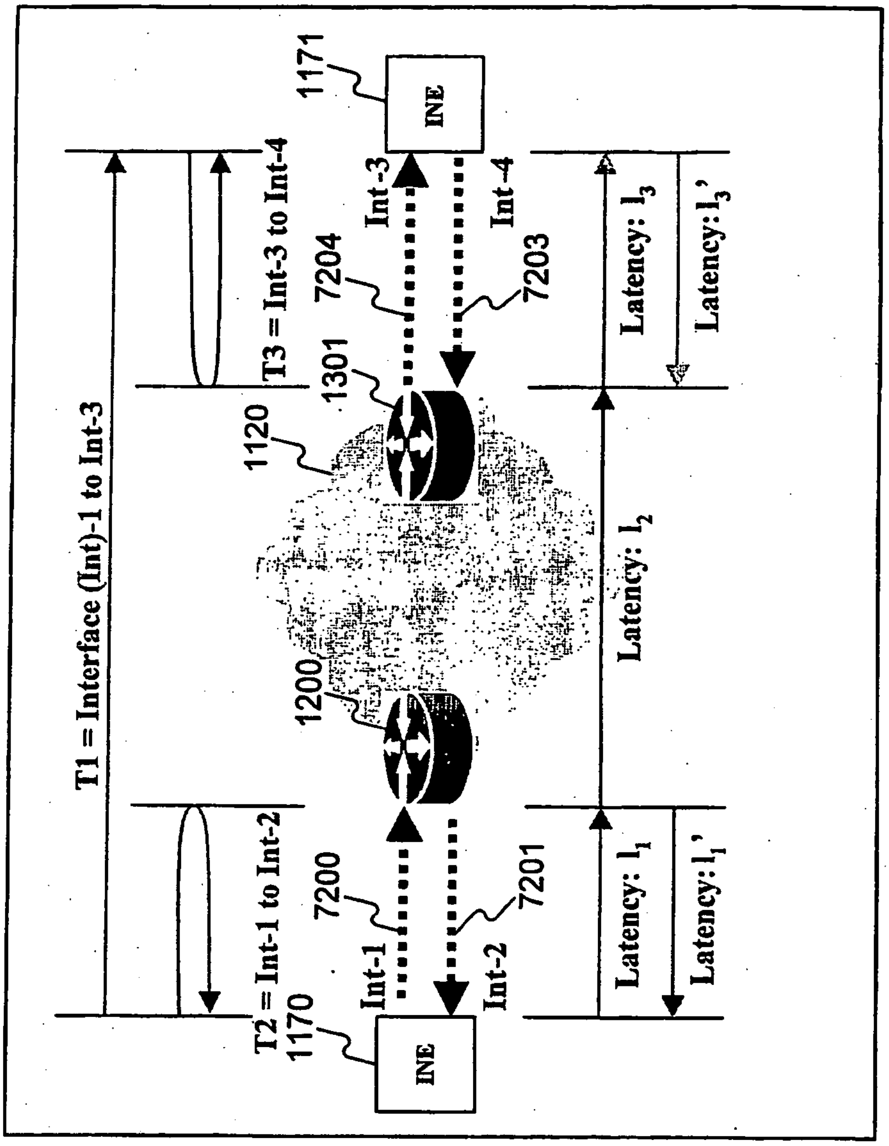
T1 = Interface (Int)-1 to Int-3
T2 = Int-1 to Int-2
T3 = Int-3 to Int-4
1170
INE
Int-1
Int-2
7200
7201
1200
1120
1301
7204
7203
Int-3
Int-4
1171
INE
Latency: $l_1$
Latency: $l_1$'
Latency: $l_2$
Latency: $l_3$
Latency: $l_3$'

FIG. 8

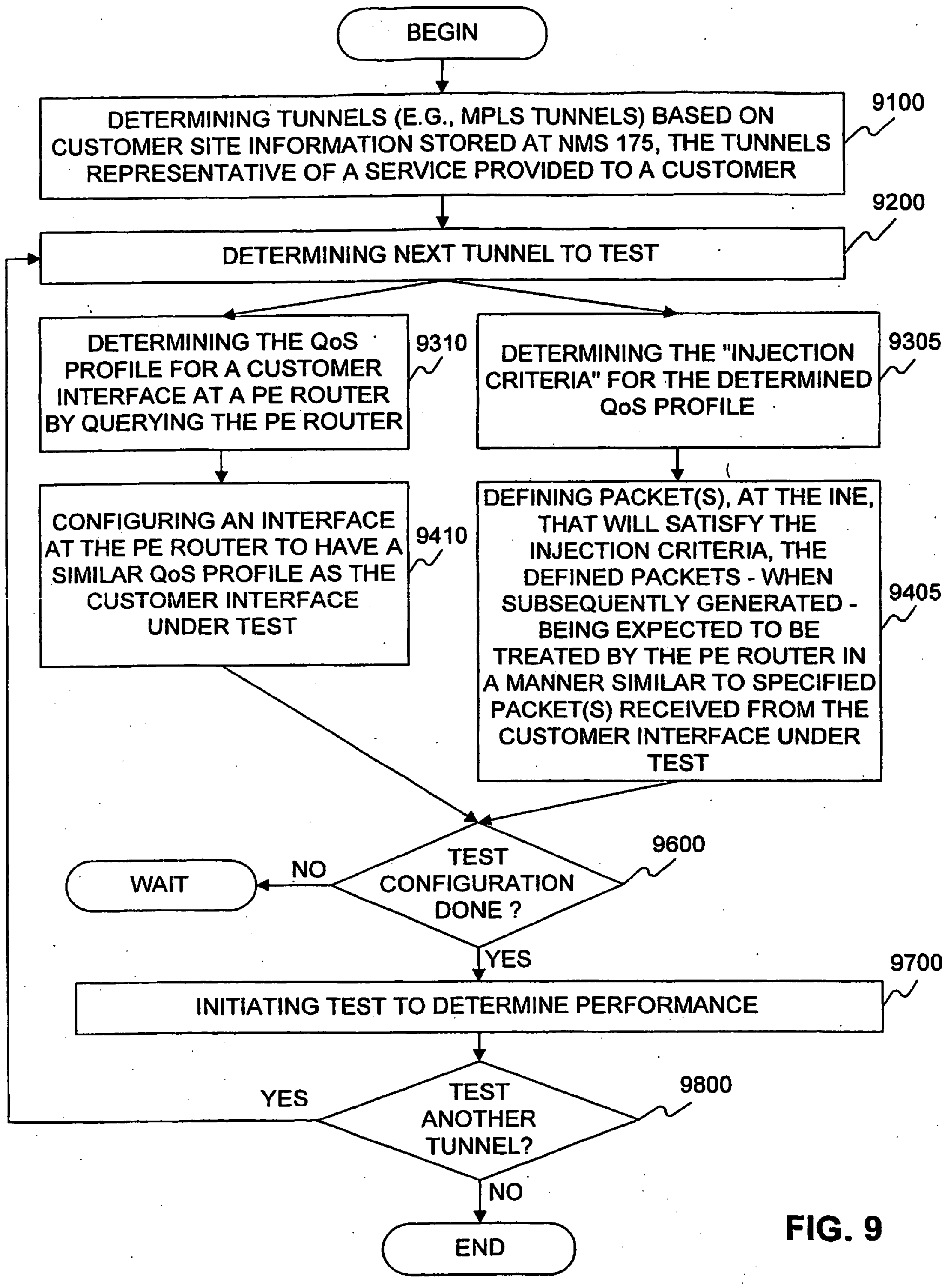
BEGIN
DETERMINING TUNNELS (E.G., MPLS TUNNELS) BASED ON CUSTOMER SITE INFORMATION STORED AT NMS 175, THE TUNNELS REPRESENTATIVE OF A SERVICE PROVIDED TO A CUSTOMER
9100
DETERMINING NEXT TUNNEL TO TEST
9200
DETERMINING THE QoS PROFILE FOR A CUSTOMER INTERFACE AT A PE ROUTER BY QUERYING THE PE ROUTER
9310
DETERMINING THE "INJECTION CRITERIA" FOR THE DETERMINED QoS PROFILE
9305
CONFIGURING AN INTERFACE AT THE PE ROUTER TO HAVE A SIMILAR QoS PROFILE AS THE CUSTOMER INTERFACE UNDER TEST
9410
DEFINING PACKET(S), AT THE INE, THAT WILL SATISFY THE INJECTION CRITERIA, THE DEFINED PACKETS - WHEN SUBSEQUENTLY GENERATED - BEING EXPECTED TO BE TREATED BY THE PE ROUTER IN A MANNER SIMILAR TO SPECIFIED PACKET(S) RECEIVED FROM THE CUSTOMER INTERFACE UNDER TEST
9405
TEST CONFIGURATION DONE ?
9600
NO
WAIT
YES
INITIATING TEST TO DETERMINE PERFORMANCE
9700
TEST ANOTHER TUNNEL?
9800
YES
NO
END

FIG. 9

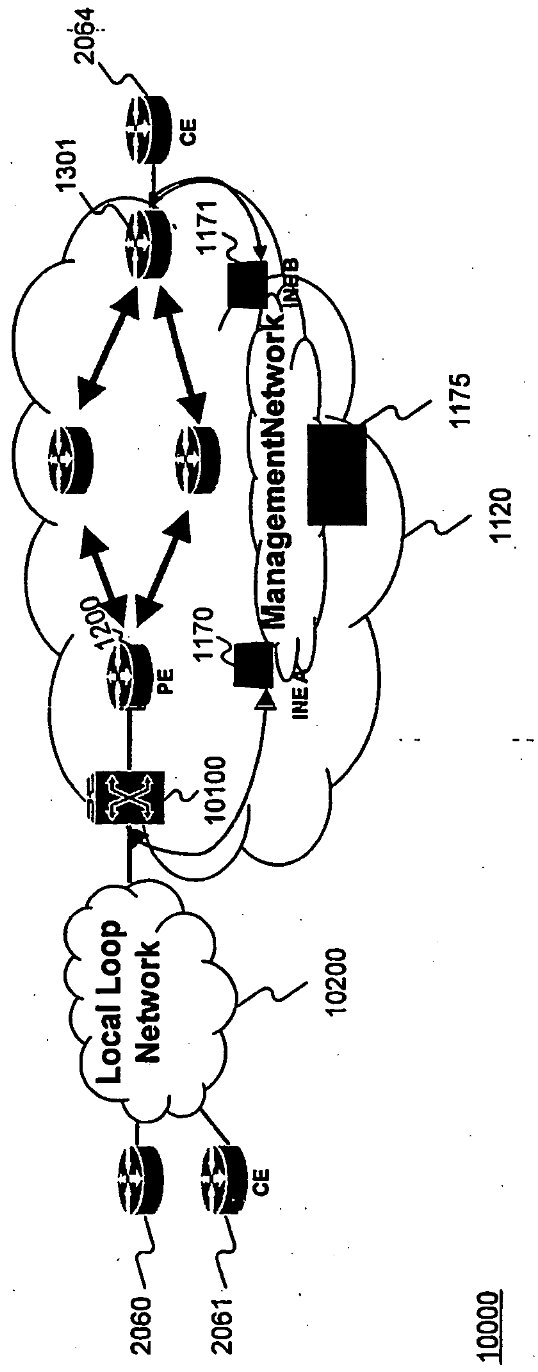
2064
CE
1301
1171
INE B
ManagementNetwork
1175
1120
1200
PE
1170
INE A
10100
Local Loop Network
10200
2060
2061
CE
10000

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020167936 A, Goodman
- US 20020167916 A
- US 84551704 A
- US 2005091482 A


### Non-patent literature cited in the description


- **E. Rosen et al.** BGP/MPLS VPNs. *The Internet Society,* 1999
- **E. Rosen et al.** BGP/MPLS IP VPNs. *The Internet Society,* September 2003
- **S. Shenker.** Specification of Guaranteed Quality of Service. *RFC-2212,* September 1997